# FASCICULE DE BREVET EUROPEEN

(11) **EP 0 973 975 B1**
(45) Date de publication et mention de la délivrance du brevet: **03.07.2002**
(21) Numéro de dépôt: 98913821.9
(22) Date de dépôt: 04.03.1998
(51) Int. Cl.: E02D 29/14, E03F 5/06

(54) **DISPOSITIF DE VOIRIE DE FORME CARREE OU RECTANGULAIRE COMPRENANT UN CADRE SUPPORT ET UN ELEMENT DE RECOUVREMENT**
VIERECKIGE BZW. RECHTECKIGE STRASSENEINRICHTUNG MIT EINEM STÜTZRAHMEN UND EINEM ABDECKELEMENT
SQUARE OR RECTANGULAR ROADWORK DEVICE COMPRISING A SUPPORT FRAME AND A COVERING ELEMENT

(30) Priorité: 11.03.1997 FR 9703048
(43) Date de publication de la demande: 26.01.2000
(73) Titulaire: SAINT-GOBAIN PAM, 54000 Nancy (FR)
(72) Inventeur: HAUER, Jean-Claude, F-54420 Saulxures lès Nancy (FR)
(74) Mandataire: Puit, Thierry
(86) Numéro de dépôt international: FR9800419
(87) Numéro de publication internationale: WO9840567

(56) Documents cités:
- GB-A- 2 120 303

## Description

La présente invention est relative à un dispositif de voirie du type comprenant deux pièces principales ayant en plan une forme générale carrée ou rectangulaire, à savoir un cadre fixe destiné à être scellé dans le sol et un élément de recouvrement, notamment un tampon ou une grille, supporté par ce cadre, lequel cadre, dans les conditions d'installation, présente deux surfaces d'appui horizontales disposées à proximité de deux coins adjacents et deux surfaces d'appui en pente situées à proximité de ses deux autres coins, ces quatre surfaces d'appui étant adaptées pour coopérer avec des surfaces d'appui complémentaires solidaires de la face inférieure de l'élément de recouvrement, les surfaces d'appui en pente étant inclinées vers le bas en direction des surfaces d'appui horizontales, et le cadre étant pourvu, à l'opposé de ses surfaces d'appui en pente, de moyens de butée qui coopèrent avec des moyens de butée complémentaires solidaires de l'élément de recouvrement.

L'invention s'applique notamment aux dispositifs de fermeture de cheminées de visite ou d'inspection d'un réseau d'eau tels que les regards de chaussée ou les regards de trottoirs, ou aux dispositifs de couronnement de bouches d'égout tels que les grilles de voirie.

Un dispositif de voirie de ce type est connu du document GB-A-2120303. Cependant, le tampon décrit dans ce document n'est en équilibre stable sur son cadre support que lorsqu'il est soumis à son seul poids ou lorsqu'il est soumis à une charge verticale qui s'exerce à l'intérieur d'un triangle d'équilibre défini approximativement par les deux coins où se situent les appuis horizontaux et par le milieu du côté opposé.

Par contre, dès qu'une charge est appliquée en dehors de ce triangle d'équilibre, notamment lors du passage d'un piéton, d'un cycliste ou autre, le tampon se soulève au niveau de l'appui en pente le plus éloigné du point d'application de la charge ; ayant perdu le contact avec le cadre à cet endroit, le tampon ne repose alors plus sur le cadre que par les deux appuis horizontaux et l'autre appui en pente, et se retrouve ainsi dans une position d'équilibre instable d'appui en trois points sur le cadre.

Il en résulte un déséquilibre du tampon qui occasionne un boitement, le tampon cognant alors contre le cadre lors du passage de piétons ou véhicules et générant ainsi un bruit indésirable.

La présente invention a donc pour but de s'affranchir de ces inconvénients et de faire en sorte que, quel que soit le point d'application de la charge sur l'élément de recouvrement, ce dernier repose toujours sur les quatre surfaces d'appui du cadre, ceci de manière à empêcher tout phénomène de boitement.
A cet effet, l'invention a pour objet un dispositif de voirie du type précité où les moyens de butée et les moyens de butée complémentaires sont conformés de façon telle que lorsque l'élément de recouvrement est soumis à l'action d'une force extérieure verticale appliquée en un point quelconque, les moyens de butée du cadre coopèrent avec les moyens de butée complémentaires de manière à amener l'élément de recouvrement, sous l'effet de la réaction induite au droit des moyens de butée par la composante horizontale de réaction à la force extérieure au droit des surfaces d'appui en pente, à tourner dans son plan autour des moyens de butée du cadre, et ce jusqu'à atteindre une position d'équilibre stable dans laquelle l'élément de recouvrement repose par ses quatre surfaces d'appui sur les surfaces d'appui correspondantes du cadre.

Le dispositif de voirie suivant l'invention peut comporter une ou plusieurs des caractéristiques suivantes :
- les surfaces d'appui en pente du cadre et les surfaces d'appui en pente coopérantes de l'élément de recouvrement ont une inclinaison commune, comprise entre 20° et 60° environ par rapport à l'horizontale ;
- au niveau de chacune des pièces principales, les moyens de butée sont disposés à mi-distance entre les surfaces d'appui horizontales, lesdits moyens comprenant une saillie sensiblement verticale solidaire d'une des pièces qui est adaptée pour venir s'engager, au moins partiellement, dans un évidement sensiblement vertical ménagé dans un relief de butée solidaire de l'autre pièce ;
- la saillie a la forme d'un prisme triangulaire droit dont l'une des arêtes est destinée à venir s'engager dans une encoche en forme de prisme triangulaire définie par l'évidement du relief de butée correspondant ;
- la saillie présente un profil convexe destiné à coopérer avec un profil concave de l'évidement associé ;
- la saillie a la forme d'un prisme triangulaire droit dont l'une des arêtes est destinée à coopérer avec un profil concave de l'évidement associé ;
- l'évidement définit une encoche en forme de prisme triangulaire droit adaptée pour coopérer avec un profil convexe de la saillie associée ;
- les moyens de butée solidaires du cadre comprennent deux pans verticaux ou inclinés vers le bas en surplomb qui sont disposés symétriquement par rapport au plan médian perpendiculaire à la face latérale du cadre adjacente aux deux surfaces d'appui horizontales, et qui s'étendent obliquement par rapport à cette face latérale, lesdits pans étant destinés à coopérer avec deux pans complémentaires solidaires de l'élément de recouvrement ;
- chaque pan oblique du cadre réalise avec ladite face latérale un angle compris entre 20° et 60° ;
- les deux surfaces d'appui horizontales du cadre sont triangulaires et présentent chacune, vers l'intérieur du cadre, un côté oblique à face verticale ou inclinée vers le bas en surplomb, délimitant ainsi deux pans obliques qui constituent les moyens de butée au niveau du cadre.

L'invention a également pour objets un cadre de support et un élément de recouvrement, notamment une grille ou un tampon, pour un dispositif de voirie tel que défini ci-dessus.

L'invention sera mieux comprise à la lecture de la description qui va suivre, donnée uniquement à titre d'exemple et faite en se référant aux dessins annexés, sur lesquels :
- la Fig. 1 représente schématiquement, en perspective et avant assemblage, les deux pièces principales d'un dispositif de voirie conforme à l'invention ;
- la Fig. 2 est une représentation schématique analogue à la Fig. 1 d'un dispositif de voirie suivant un deuxième mode de réalisation de l'invention.

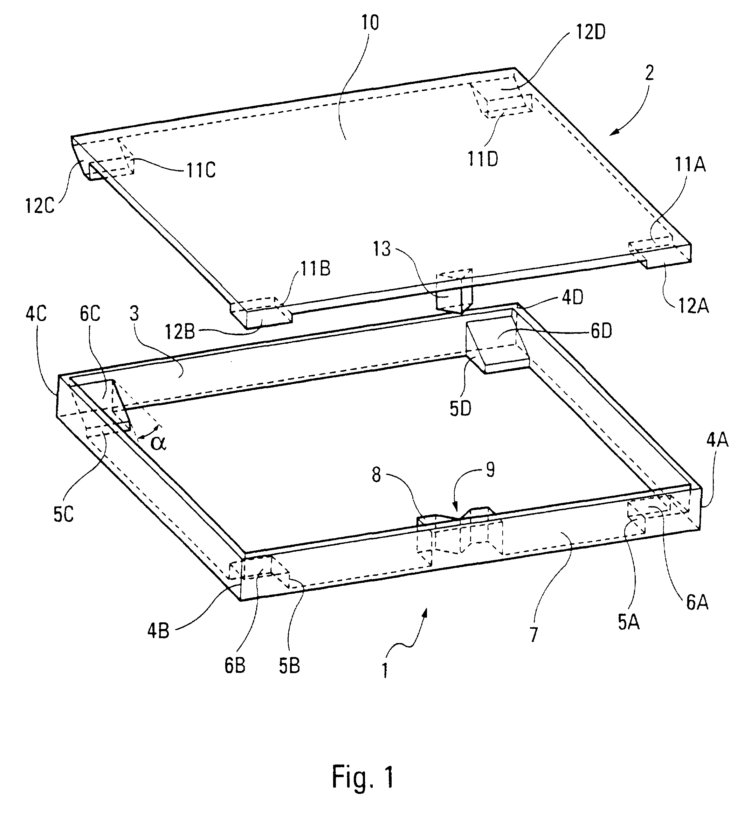

Le dispositif de voirie représenté schématiquement à la Fig. 1 est un regard de trottoir installé sur un trottoir (non représenté), ou une surface comparable telle qu'un plancher de parking par exemple, où il permet l'inspection d'un réseau d'eau souterrain dont il assure la fermeture.

Il se compose de deux pièces principales en fonte ductile, à savoir un cadre support 1 fixe et un tampon 2 amovible qui constitue un élément de recouvrement du cadre.

Pour faciliter la compréhension de l'invention, les deux pièces 1, 2 sont représentées désassemblées, dans une position où le tampon 2 est prêt à être monté sur son cadre support 1.

Le cadre 1 a en plan une forme générale carrée ou rectangulaire et présente une jupe verticale 3 munie à sa base d'une semelle périphérique (non représentée) destinée à sceller le cadre dans le sol ou sur une structure support telle que du béton par exemple.

Deux coins adjacents 4A, 4B du cadre 1 sont équipés chacun d'un relief d'appui 5A, 5B à portée supérieure parallèle au plan du cadre, définissant ainsi deux surfaces d'appui horizontales 6A, 6B. Celles-ci sont coplanaires et se situent à peu près à mi-hauteur de la jupe 3.

Les deux autres coins 4C, 4D du cadre sont équipés chacun d'un relief d'appui 5C, 5D à portée supérieure s'étendant, depuis une région proche du sommet de la jupe 3, vers la base du cadre et ce en direction du relief d'appui horizontal 5A, 5B situé en vis-à-vis, définissant ainsi deux surfaces d'appui en pente 6C, 6D ; celles-ci sont coplanaires et réalisent avec l'horizontale un angle α compris entre 20° et 60° environ.

A mi-distance entre les deux reliefs à surface d'appui horizontale 6A, 6B, la face latérale 7 du cadre adjacente à ces deux reliefs d'appui 5A, 5B présente intérieurement un relief de butée 8 solidaire de la jupe 3 dans lequel un évidement 9 sensiblement vertical est pratiqué. Cet évidement 9 a une forme en V ouvert vers l'intérieur du cadre, définissant ainsi une encoche en forme de prisme triangulaire droit.

L'intérêt de ce relief de butée 8 évidé sera expliqué par la suite.

Le tampon 2 comporte essentiellement un voile pian 10 de forme générale carrée ou rectangulaire et de dimensions légèrement inférieures aux dimensions intérieures de la jupe 3 du cadre 1.

De la même manière que pour le cadre 1, le tampon 2 est muni, dans ses coins, de quatre reliefs d'appui 11A, 11B, 11C, 11D solidaires de la face inférieure du voile 10 et destinés à coopérer avec les quatre reliefs d'appuis correspondants 5A, 5B, 5C, 5D du cadre 1.

La hauteur des reliefs d'appui du tampon 2 est telle que, lorsque le tampon repose sur son cadre support 1, la face supérieure du voile 10 du tampon affleure la tranche supérieure de la jupe 3 du cadre.

Deux reliefs d'appui 11A, 11B adjacents du tampon 2 présentent ainsi chacun une surface d'appui horizontale 12A, 12B destinée à venir en contact avec la surface d'appui horizontale complémentaire 6A, 6B du cadre, tandis que les deux autres reliefs d'appui 11C, 11D du tampon 2 présentent chacun une surface d'appui en pente 12C, 12D destinée à prendre appui sur la surface d'appui en pente correspondante 6C, 6D au niveau du cadre 1. Les surfaces d'appui en pente 12C, 12D du tampon 2 sont là encore inclinées vers le bas en direction des appuis horizontaux respectifs 11A, 11B situés à l'opposé, et réalisent avec l'horizontale un angle correspondant à l'angle d'inclinaison α des surfaces d'appui en pente 6C, 6D du cadre.

A mi-distance entre les deux reliefs d'appui 11A, 11B à portée horizontale, le tampon 2 présente un moyen de butée 13 en saillie verticale vers le bas ; celui-ci est destiné à coopérer avec l'évidement 9 du relief de butée 8 du cadre 1.

Dans l'exemple décrit, cette saillie 13 a ainsi la forme d'un prisme triangulaire droit dont l'une des arêtes est destinée à venir s'engager dans l'évidement prismatique 9 complémentaire au niveau du cadre 1.

Cet agencement particulier, comprenant d'un côté du dispositif des surfaces d'appui en pente coopérantes inclinées vers le bas en direction du côté opposé où se situent des moyens de butée 8, 13 correspondants et complémentaires, conduit ainsi à un système d'appui statique en quatre points où le tampon 2 repose simultanément par ses quatre surfaces d'appui 12A, 12B, 12C, 12D sur les quatre surfaces d'appui associées 6A, 6B, 6C, 6D du cadre 1, et ce notamment sous l'action d'une charge s'exerçant sur le tampon en un point quelconque du quadrilatère délimité par les quatre reliefs d'appui 11A, 11B, 11C, 11D situés aux extrémités du tampon.

Le fonctionnement de ce système est tel que, sous l'action d'une force extérieure verticale appliquée en un point quelconque, le tampon 2 est déstabilisé d'un appui sur trois points pour aller rechercher le quatrième point d'appui. En effet, la charge qui s'exerce sur le tampon 2 amène tout d'abord celui-ci en contact avec trois des quatre appuis du cadre 1, dont les deux reliefs d'appui à portée horizontale 6A, 6B et l'un des deux reliefs d'appui à portée inclinée 6C, 6D, à savoir celui situé au plus près du point d'application de la force verticale. La force verticale appliquée au tampon 2 génère ainsi initialement trois réactions opposées du cadre 1. Deux de ces réactions, issues des deux reliefs d'appui à portée horizontale 6A, 6B, sont verticales et dirigées vers le haut. La troisième réaction, perpendiculaire à la pente du relief d'appui incliné sollicité en premier, présente une composante horizontale et une composante verticale. La composante horizontale de la réaction au niveau de ce relief d'appui en pente induit la participation de la butée 8 dont la réaction est directionnellement inapte à créer un état d'équilibre sans la participation complémentaire du second relief d'appui en pente, ce qui permet d'aboutir à un système d'équilibre de trois forces en projection horizontale.

A cet effet, la saillie verticale médiane 13 du tampon 2 et l'évidement 9 du relief de butée 8 du cadre avec lequel la saillie 13 coopère se comportent à la manière d'une charnière articulée, en autorisant une légère rotation du tampon 2 dans son plan et autour du relief de butée 8. Ainsi, sous l'action de la force verticale dirigée vers le bas, le tampon 2 est amené à pivoter autour du relief de butée 8 contre lequel il prend appui par l'intermédiaire de la saillie 13, et ce jusqu'à venir en contact avec le second relief d'appui en pente du cadre 1, permettant de ce fait au tampon 2 de trouver et de conserver un équilibre stable.

Dans cette position d'équilibre, les composantes horizontales des réactions d'appui du tampon sur les surfaces d'appui en pente 6C, 6D du cadre sont équilibrées par la réaction horizontale résultant du contact de la saillie 13 contre le relief de butée 8 du cadre 1.

L'état de stabilité obtenu, où le tampon 2 repose simultanément par ses quatre surfaces d'appui 12A, 12B, 12C, 12D sur les surfaces d'appui respectives 6A, 6B, 6C, 6D du cadre 1, empêche par conséquent tout phénomène de boitement.

On notera que dans le mode de réalisation décrit à la Fig. 1 l'évidement 9 du relief de butée 8 du cadre 1 et la saillie 13 associée au niveau du tampon 2 sont réalisés sous la forme de prismes triangulaires dont les profils en V complémentaires facilitent l'articulation de la saillie 13 dans l'évidement 9 lui servant de logement.

En variante, on peut cependant envisager d'autres profils coopérants pour la saillie 13 et l'évidement 9, notamment une saillie à profil convexe ou en forme de V qui coopère avec un évidement concave complémentaire, ou encore une saillie à profil convexe dont l'arrondi vient se loger dans un évidement en forme de V.

En variante encore, la saillie 13 et l'évidement 9 qui lui est associé peuvent être inversés au niveau des deux pièces principales 1, 2 du dispositif de voirie, la saillie étant alors solidaire du cadre tandis que le relief de butée évidé correspondant est rendu solidaire du tampon ou de la grille.

D'autre part, il peut également être avantageux si on souhaite ne pas avoir une seule position de montage du tampon sur le cadre et faciliter ainsi la tâche de l'opérateur, plus particulièrement lorsque le dispositif de voirie est de forme générale carrée, de munir les extrémités de chaque face latérale du cadre et du tampon d'un relief d'appui à portée horizontale ainsi que d'un relief d'appui à portée inclinée vers le bas et vers la face latérale opposée, et de prévoir au milieu de chacune des faces latérales du dispositif un ensemble coopérant constitué d'une saillie et d'un relief de butée évidé complémentaire ; le tampon peut alors être monté sur le cadre dans l'une quelconque des quatre positions angulaires décalées l'une de l'autre de 90°, tout en assurant, pour chaque position de montage, le contact simultané sur quatre appuis du cadre.

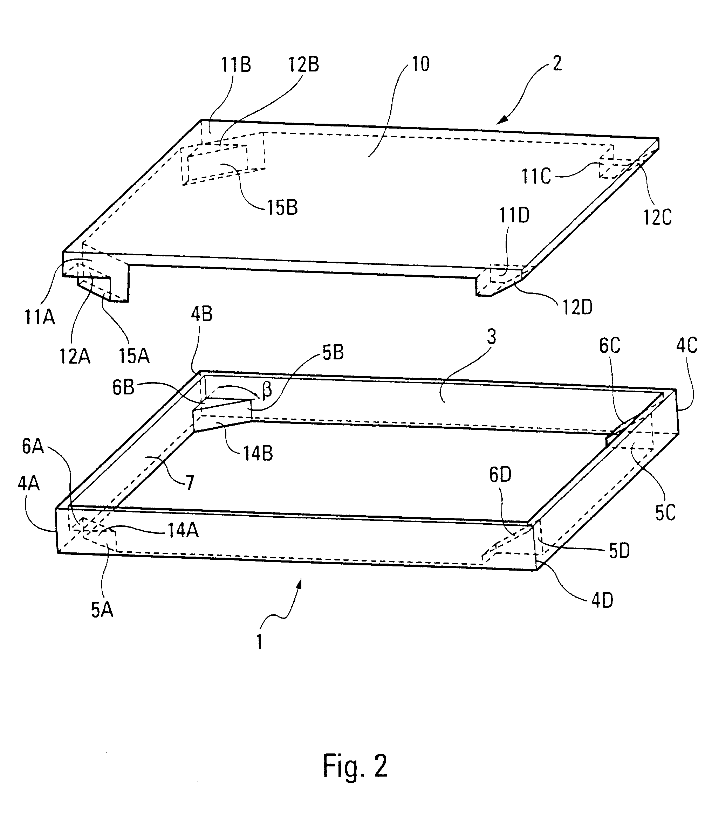

La variante de la Fig. 2 diffère de celle de la Fig. 1 par l'agencement des moyens de butée employés au niveau du cadre 1 et du tampon 2.

Chacun des deux reliefs d'appui 5A, 5B à portée horizontale du cadre 1 a, en plan, une forme triangulaire et présente, vers l'intérieur du cadre, une face sensiblement verticale 14A, 14B orientée obliquement par rapport à la face latérale 7 du cadre adjacente aux deux reliefs d'appui 5A, 5B.

Ces deux faces verticales définissent ainsi deux pans obliques 14A, 14B qui constituent les moyens de butée au niveau du cadre 1. Les deux pans obliques 14A, 14B sont disposés symétriquement par rapport au plan vertical médian perpendiculaire à la face latérale 7 du cadre, et réalisent avec cette face 7 un angle β compris entre 20° et 60° environ et de préférence égal à 45°.

De manière correspondante, le tampon 2 présente deux pans obliques et verticaux 15A, 15B qui prolongent les surfaces d'appui horizontales respectives 12A, 12B vers le bas et qui sont adaptés pour coopérer avec les pans correspondants 14A, 14B du cadre 1 dont ils constituent des moyens de butée complémentaires.

Ainsi, lorsque le tampon 2 est mis en place sur son cadre support 1 et qu'une force verticale dirigée vers le bas est appliquée en un emplacement quelconque du tampon, ce dernier est déstabilisé d'un appui sur trois points pour aller rechercher le quatrième point d'appui. En effet, la force extérieure verticale qui s'exerce sur le tampon 2 amène tout d'abord celui-ci au contact des deux reliefs d'appui à portée horizontale 6A, 6B du cadre et du relief d'appui à portée inclinée situé au plus près du point d'application de la force.

Il en résulte, au niveau de cette surface d'appui en pente du cadre 1, une réaction d'appui dont la composante horizontale est dirigée, parallèlement à un côté du cadre, vers le relief d'appui horizontal situé en vis-à-vis. Cette réaction horizontale ne peut cependant pas être équilibrée par les réactions horizontales qui s'exercent perpendiculairement à chacun des pans obliques 14A, 14B du cadre et qui sont générées par contact de ces pans avec les pans obliques 15A, 15B associés au niveau du tampon 2.

Pour équilibrer ces réactions horizontales, il est nécessaire que le tampon 2 vienne en contact avec le quatrième appui, à savoir le second relief d'appui en pente du cadre, ceci de manière à développer à ce niveau une réaction d'appui dont la composante horizontale permet d'équilibrer le système.

La participation du quatrième appui est alors obtenue, sous l'action de la force verticale, par une légère rotation du tampon 2 dans le plan horizontal, par pivotement autour des moyens de butée que constituent les pans obliques 14A, 14B du cadre, et ce jusqu'à amener le tampon 2 au contact de la surface d'appui en pente du cadre non sollicitée initialement.

On aboutit ainsi à un état stable où le tampon 2 repose simultanément par ses quatre surfaces d'appui 12A, 12B, 12C, 12D sur les surfaces d'appui complémentaires 6A, 6B, 6C, 6D du cadre 1, ce qui empêche tout phénomène de boitement.

Il est à noter que cette rotation du tampon 2 dans son plan, qui permet à ce dernier de trouver et de conserver une stabilité d'appui en quatre points sur le cadre, est rendue possible grâce à l'obliquité des pans 14A, 14B du cadre et des pans 15A, 15B complémentaires du tampon.

On notera par ailleurs que ces pans obliques 14A, 14B du cadre 1 ne sont pas nécessairement verticaux mais peuvent très bien, en variante, être inclinés vers le bas en surplomb.

Enfin, les pans obliques 14A, 14B du cadre et les pans obliques complémentaires 15A, 15B du tampon peuvent être dissociés des appuis horizontaux et se situer, sur la face latérale commune à ces appuis horizontaux, à des emplacements disposés symétriquement par rapport au plan médian perpendiculaire à cette face latérale.

## Revendications

1. Dispositif de voirie du type comprenant deux pièces principales (1, 2) ayant en plan une forme générale carrée ou rectangulaire, à savoir un cadre (1) fixe destiné à être scellé dans le sol et un élément de recouvrement (2) supporté par ce cadre (1), lequel cadre, dans les conditions d'installation, présente deux surfaces d'appui horizontales (6A, 6B) disposées à proximité de deux coins (4A, 4B) adjacents et deux surfaces d'appui en pente (6C, 6D) situées à proximité de ses deux autres coins (4C, 4D), ces quatre surfaces d'appui (6A, 6B, 6C, 6D) étant adaptées pour coopérer avec des surfaces d'appui complémentaires (12A, 12B, 12C, 12D) solidaires de la face inférieure de l'élément de recouvrement (2), les surfaces d'appui en pente (6C, 6D, 12C, 12D) étant inclinées vers le bas en direction des surfaces d'appui horizontales (6A, 6B, 12A, 12B), et le cadre (1) étant pourvu, à l'opposé de ses surfaces d'appui en pente (6C, 6D), de moyens de butée (8, 9 ; 14A, 14B) qui coopèrent avec des moyens de butée complémentaires (13 ; 15A, 15B) solidaires de l'élément de recouvrement (2), **caractérisé en ce que** les moyens de butée (8, 9 ; 14A, 14B) et les moyens de butée complémentaires (13 ; 15A, 15B) sont conformés de façon telle que, lorsque l'élément de recouvrement est soumis à l'action d'une force extérieure verticale appliquée en un point quelconque, les moyens de butée du cadre coopèrent avec les moyens de butée complémentaires de manière à amener l'élément de recouvrement, sous l'effet de la réaction induite au droit des moyens de butée par la composante horizontale de réaction à la force extérieure au droit des surfaces d'appui en pente, à tourner dans son plan autour des moyens de butée (8, 9 ; 14A, 14B) du cadre (1), et ce jusqu'à atteindre une position d'équilibre stable dans laquelle l'élément de recouvrement (2) repose par ses quatre surfaces d'appui (12A, 12B, 12C, 12D) sur les surfaces d'appui correspondantes (6A, 6B, 6C, 6D) du cadre (1).

2. Dispositif de voirie suivant la revendication 1, **caractérisé en ce que** les surfaces d'appui en pente (6C, 6D) du cadre (1) et les surfaces d'appui en pente coopérantes (12C, 12D) de l'élément de recouvrement (2) ont une inclinaison commune, comprise entre 20° et 60° environ par rapport à l'horizontale.

3. Dispositif de voirie suivant la revendication 1 ou 2, **caractérisé en ce que**, au niveau de chacune des pièces principales (1 ; 2) les moyens de butée (8, 9 ; 13) sont disposés à mi-distance entre les surfaces d'appui horizontales (6A, 6B ; 12A, 12B), lesdits moyens comprenant une saillie (13) sensiblement verticale solidaire d'une des pièces qui est adaptée pour venir s'engager, au moins partiellement, dans un évidement (9) sensiblement vertical ménagé dans un relief de butée (8) solidaire de l'autre pièce.

4. Dispositif de voirie suivant la revendication 3, **caractérisé en ce que** la saillie (13) a la forme d'un prisme triangulaire droit dont l'une des arêtes est destinée à venir s'engager dans une encoche (9) en forme de prisme triangulaire définie par l'évidement du relief de butée (8) correspondant.

5. Dispositif de voirie suivant la revendication 3, **caractérisé en ce que** la saillie présente un profil convexe destiné à coopérer avec un profil concave de l'évidement associé.

6. Dispositif de voirie suivant la revendication 3, **caractérisé en ce que** la saillie a la forme d'un prisme triangulaire droit dont l'une des arêtes est destinée à coopérer avec un profil concave de l'évidement associé.

7. Dispositif de voirie suivant la revendication 3, **caractérisé en ce que** l'évidement définit une encoche en forme de prisme triangulaire droit adaptée pour coopérer avec un profil convexe de la saillie associée.

8. Dispositif de voirie suivant la revendication 1 ou 2, **caractérisé en ce que** le moyens de butée solidaires du cadre (1) comprennent deux pans (14A, 14B) verticaux ou inclinés vers le bas en surplomb qui sont disposés symétriquement par rapport au plan médian perpendiculaire à la face latérale (7) du cadre (1) adjacente aux deux surfaces d'appui horizontales (6A, 6B), et qui s'étendent obliquement par rapport à cette face latérale (7), lesdits pans (14A, 14B) étant destinés à coopérer avec deux pans complémentaires (15A, 15B) solidaires de l'élément de recouvrement (2).

9. Dispositif de voirie suivant la revendication 8, **caractérisé en ce que** chaque pan oblique (14A, 14B) du cadre (1) réalise avec ladite face latérale (7) un angle compris entre 20° et 60°.

10. Dispositif de voirie suivant la revendication 8 ou 9, **caractérisé en ce que** les deux surfaces d'appui horizontales (6A, 6B) du cadre (1) sont triangulaires et présentent chacune, vers l'intérieur du cadre, un côté oblique à face verticale ou inclinée vers le bas en surplomb, délimitant ainsi deux pans obliques (14A, 14B) qui constituent les moyens de butée au niveau du cadre (1).

## Patentansprüche

1. Straßeneinrichtung von der Art mit zwei Hauptbauteilen (1, 2), die in der Ebene eine allgemein quadratische oder rechteckige Form haben, d.h. mit einem ortsfesten Rahmen (1), der im Boden eingemauert werden soll, und mit einem Abdeckelement (2), das von diesem Rahmen (1) getragen wird, wobei der Rahmen im Installationszustand zwei waagrechte Auflageflächen (6A, 6B), die in der Nähe von zwei benachbarten Ecken (4A, 4B) angeordnet sind, und zwei schräge Auflageflächen (6C, 6D) aufweist, die sich in der Nähe seiner beiden anderen Ecken (4C, 4D) befinden, wobei diese vier Auflageflächen (6A, 6B, 6C, 6D) geeignet sind, um mit komplementären Auflageflächen (12A, 12B, 12C, 12D) zusammenzuwirken, die fest mit der Unterseite des Abdeckelements (2) verbunden sind, wobei die schrägen Auflageflächen (6C, 6D, 12C, 12D) nach unten in Richtung der waagrechten Auflageflächen (6A, 6B, 12A, 12b) geneigt sind, und der Rahmen (1) entgegengesetzt zu seinen schrägen Auflageflächen (6C, 6D) mit Anschlagmitteln (8, 9; 14A, 14B) versehen ist, die mit komplementären Anschlagmitteln (13; 15A, 15B) zusammenwirken, welche fest mit dem Abdeckelement (2) verbünden sind, **dadurch gekennzeichnet, daß** die Anschlagmittel (8, 9; 14A, 14B) und die komplementären Anschlagmittel (13; 15A, 15B) so ausgebildet sind, daß, wenn das Abdeckelement der Wirkung einer an einem beliebigen Punkt auftreffenden, äußeren senkrechten Kraft unterworfen wird, die Anschlagmittel des Rahmens mit den komplementären Anschlagmitteln so zusammenwirken, daß das Abdeckelement, unter der Wirkung der Reaktion, die rechtwinklig zu den Anschlagmitteln durch die waagrechte Komponente der Reaktion auf die äußere Krafteinwirkung rechtwinklig zu den schrägen Auflageflächen induziert wird, in seiner Ebene um Anschlagmittel (8, 9; 14A, 14B) des Rahmens (1) so weit in Drehung versetzt wird, bis eine stabile Gleichgewichtsstellung erreicht wird, in der das Abdeckelement (2) mit seinen vier Auflageflächen (12A, 12B, 12C, 12D) auf den entsprechenden Auflageflächen (6A, 6B, 6C, 6D) des Rahmens (1) ruht.

2. Straßeneinrichtung nach Anspruch 1, **dadurch gekennzeichnet, daß** die schrägen Auflageflächen (6C, 6D) des Rahmens (1) und die damit zusammenwirkenden schrägen Auflageflächen (12C, 12D) des Abdeckelements (2) eine gemeinsame Neigung haben, die etwa zwischen 20° und 60° in bezug auf die Waagrechte liegt.

3. Straßeneinrichtung nach Anspruch 1 oder 2, **dadurch gekennzeichnet, daß** in Höhe jedes der Hauptbauteile (1; 2) die Anschlagmittel (8, 9; 13) in halbem Abstand zwischen den waagrechten Auflageflächen (6A, 6B; 12A, 12B) angeordnet sind, wobei die Mittel einen im wesentlichen senkrechten Vorsprung (13) aufweisen, der mit einem der Bauteile fest verbunden und geeignet ist, um sich zumindest teilweise in eine im wesentlichen senkrechte Aussparung (9) einzufügen, die in einem Anschlagrelief (8) ausgebildet ist, das fest mit dem anderen Bauteil verbunden ist.

4. Straßeneinrichtung nach Anspruch 3, **dadurch gekennzeichnet, daß** der Vorsprung (13) die Form eines geraden Dachkantprismas hat, dessen eine Kante sich in eine Kerbe (9) in Form eines Dachkantprismas einfügt, die von der Aussparung des entsprechenden Anschlagreliefs (8) gebildet wird.

5. Straßeneinrichtung nach Anspruch 3, **dadurch gekennzeichnet, daß** der Vorsprung ein konvexes Profil aufweist, das mit einem konkaven Profil der zugeordneten Aussparung zusammenwirkt.

6. Straßeneinrichtung nach Anspruch 3, **dadurch gekennzeichnet, daß** der Vorsprung die Form eines geraden Dachkantprismas hat, dessen eine Kante mit einem konkaven Profil der zugeordneten Aussparung zusammenwirkt.

7. Straßeneinrichtung nach Anspruch 3, **dadurch gekennzeichnet, daß** die Aussparung eine Kerbe in Form eines geraden Dachkantprismas definiert, das mit einem konvexen Profil des zugeordneten Vorsprungs zusammenwirkt.

8. Straßeneinrichtung nach Anspruch 1 oder 2, **dadurch gekennzeichnet, daß** die Anschlagmittel, die fest mit dem Rahmen (1) verbunden sind, zwei überstehende senkrechte oder nach unten geneigte Flächen (14A, 14B) aufweisen, die in bezug auf die zur den beiden waagrechten Auflageflächen (6A, 6B) benachbarten Seitenfläche (7) des Rahmens (1) senkrechte Mittelebene symmetrisch angeordnet sind und die sich schräg in bezug auf diese Seitenfläche (7) erstrecken, wobei die Flächen (14A, 14B) mit zwei komplementären Flächen (15A, 15B) zusammenwirken, die fest mit dem Abdeckelement (2) verbunden sind.

9. Straßeneinrichtung nach Anspruch 8, **dadurch gekennzeichnet, daß** jede schräge Fläche (14A, 14B) des Rahmens (1) mit der Seitenfläche (7) einen Winkel zwischen 20° und 60° bildet.

10. Straßeneinrichtung nach Anspruch 8, **dadurch gekennzeichnet, daß** die beiden waagrechten Auflageflächen (6A, 6B) des Rahmens (1) dreieckig sind und je zur Innenseite des Rahmens eine schräge Seite mit überstehender senkrechter oder nach unten geneigter Fläche aufweisen, wodurch zwei schräge Flächen (14A, 14B) definiert werden, welche die Anschlagmittel in Höhe des Rahmens (1) bilden.

## Claims

1. A manhole cover of the type comprising two main parts (1, 2) having, in plan view, a generally square or rectangular shape, namely a fixed frame (1) intended to be embedded in the ground and a covering member (2) supported by this frame (1), the latter having, under the conditions of installation, two horizontal bearing surfaces (6A, 6B) arranged in the vicinity of two adjacent comers (4A, 4B) and two sloping bearing surfaces (6C, 6D) located in the vicinity of its other two comers (4C, 4D), these four bearing surfaces (6A; 6B, 6C, 6D) being adapted to co-operate with complementary bearing surfaces (12A, 12B, 12C, 12D) integral with the lower surface of the covering member (2), the sloping bearing surfaces (6C, 6D, 12C, 12D) being inclined downwards in the direction of the horizontal bearing surfaces (6A, 6B, 12A, 12B), and the frame (1) being provided, in opposition to its sloping bearing surfaces (6C, 6D), with, stop means (8, 9; 14A, 14B) which co-operate with complementary stop means (13; 15A, 15B) integral with the covering member (2), **characterised in that** the stop means (8, 9; 14A, 14B) and the complementary stop means (13; 15A, 15B) are shaped in such a way that, when the covering member is subjected to the action of a vertical external force applied at any point, the stop means of the frame co-operate with the complementary stop means in such a way as to cause the covering member to turn, under the influence of the reaction ― induced to the right of the stop means by the horizontal reaction component - to the external force to the right of the sloping bearing surfaces, in its plane about the stop means (8, 9; 14A, 14B) of the frame (1) until a position of stable equilibrium is attained in which the covering member (2) rests by its four bearing surfaces (12A, 12B, 12C, 12D) on the corresponding bearing surfaces (6A, 6B, 6C, 6D) of the frame (1).

2. A manhole cover according to Claim 1, **characterised in that** the sloping bearing surfaces (6C, 6D) of the frame (1) and the co-operating sloping bearing surfaces (12C, 12D) of the covering member (2) have a common inclination of between approximately 20° and 60° relative to the horizontal.

3. A manhole cover according to Claim 1 or 2, **characterised in that**, at each of the main parts (1; 2), the stop means (8, 9; 13) are arranged midway between the horizontal bearing surfaces (6A, 6B; 12A, 12B), the said means comprising a substantially vertical projection (13) integral with one of the parts which is adapted to engage, at least partially, in a substantially vertical recess (9) formed in a raised stop (8) integral with the other part.

4. A manhole cover according to Claim 3, **characterised in that** the projection (13) is in the shape of a right triangular prism, one of the edges of which is intended to engage in a notch (9) in the shape of a triangular prism defined by the recess of the corresponding raised stop (8).

5. A manhole cover according to Claim 3, **characterised in that** the projection has a convex profile intended to co-operate with a concave profile of the associated recess.

6. A manhole cover according to Claim 3, **characterised in that** the projection is in the shape of a right triangular prism, one of the edges of which is intended to co-operate with a concave profile of the associated recess.

7. A manhole cover according to Claim 3, **characterised in that** the recess defines a notch in the shape of a right triangular prism adapted to co-operate with a convex profile of the associated projection.

8. A manhole cover according to Claim 1 or 2, **characterised in that** the stop means integral with the frame (1) comprise two vertical or overhanging downwardly inclined faces (14A, 14B) which are arranged symmetrically with respect to the median plane perpendicular to the lateral surface (7) of the frame (1) adjacent to the two horizontal bearing surfaces (6A, 6B), and which extend obliquely with respect to this lateral surface (7), the said faces (14A, 14B) being intended to co-operate with two complementary faces (15A, 15B) integral with the covering member (2).

9. A manhole cover according to Claim 8, **characterised in that** each oblique face (14A, 14B) of the frame (1) forms an angle of between 20° and 60° with the said lateral surface (7).

10. A manhole cover according to Claim 8 or 9, **characterised in that** the two horizontal bearing surfaces (6A, 6B) of the frame (1) are triangular and each have, towards the interior of the frame, an oblique side with a vertical or overhanging downwardly inclined face, thus delimiting two oblique faces (14A, 14B) which constitute the stop means at the frame (1).
